# EUROPÄISCHE PATENTSCHRIFT

(11) **EP 0 758 363 B1**
(45) Veröffentlichungstag und Bekanntmachung des Hinweises auf die Patenterteilung: **03.12.1997**
(21) Anmeldenummer: 95919344.2
(22) Anmeldetag: 26.04.1995
(51) Int. Cl.: C09D 5/36

(54) **WÄSSRIGES ÜBERZUGSMITTEL UND VERFAHREN ZUR HERSTELLUNG VON MEHRSCHICHTLACKIERUNGEN MIT VOM BETRACHTUNGSWINKEL ABHÄNGIGEM FARBEINDRUCK**
AQUEOUS COATING PRODUCT AND A PROCESS FOR PRODUCING MULTIPLE LAYER PAINT COATINGS WHOSE PERCEIVED COLOUR VARIES WITH THE ANGLE FROM WHICH THEY ARE VIEWED
PRODUIT DE REVETEMENT AQUEUX ET PROCEDE PERMETTANT DE REALISER DES REVETEMENTS DE PEINTURE MULTICOUCHES DONT LA COULEUR PERCUE DEPEND DE L'ANGLE D'OBSERVATION

(30) Priorität: 30.04.1994 DE 4415265
(43) Veröffentlichungstag der Anmeldung: 19.02.1997
(73) Patentinhaber: Wacker-Chemie GmbH, 81737 München (DE)
(72) Erfinder: DÖBERT, Jürgen, D-45549 Sprockhövel (DE); OPPERMANN, Manfred, D-42389 Wuppertal (DE); PRESCHER, Michael, D-42111 Wuppertal (DE); RICHTER, Günter, D-42327 Wuppertal (DE)
(74) Vertreter: Potten, Holger
(86) Internationale Anmeldenummer: EP9501584
(87) Internationale Veröffentlichungsnummer: WO9529962

(56) Entgegenhaltungen:
- EP-A- 0 357 844
- EP-A- 0 358 208
- WO-A-91/13125

## Beschreibung

Die Erfindung betrifft wasserverdünnbare Überzugsmittel, die geeignet sind Überzüge mit besonders brillantem, betrachtungswinkelabhängigem Farbeindruck zu erzeugen. Insbesondere handelt es sich bei diesen Überzugsmitteln um Wasserbasislacke.

Aus Umweltschutzgründen ist man bestrebt, lösemittelhaltige Überzugsmittel durch wäßrige Überzugsmittel zu ersetzen. Dieser Ersatz ist besonders im Falle von Effektbasislacken von Bedeutung, da diese systembedingt einen besonders hohen Lösemittelgehalt aufweisen. Dementsprechend sind wäßrige Effektbasislacke entwickelt worden. Sie enthalten plättchenförmige Effektpigmente, die einen sogenannten Helligkeits- und/oder Farbflop bewirken. Ausgehend von reinen Metallschuppenpigmenten zur Erzeugung eines Helligkeitsflops, z.B. aus Aluminium, ist eine Vielzahl weiterer plättchenförmiger Effektpigmente entwickelt worden, die für den Einsatz in wäßrigen Effektbasislacken geeignet sind. Beispiele für weitere plättchenförmige Effektpigmente sind Interferenzpigmente, wie z.B. metalloxidbeschichtete Metallpigmente, z.B. titandioxidbeschichtetes oder mischoxidbeschichtetes Aluminium, beschichtete Glimmer, wie z.B. titandioxidbeschichtete Glimmer, Graphiteffektpigmente. Mit den bekannten Interferenzpigmenten kann ein nur relativ schwach ausgeprägter Farbflop erzielt werden.

In EP-A-0 357 844 werden wasserverdünnbare Überzugsmittel beschrieben, die eine Kombination von Flop-Effektpigmenten und eingekapselten thermochromen Flüssigkristallpigmenten enthalten. Damit hergestellte Überzüge wechseln ihren Farbeindruck reversibel in Abhängigkeit von der Temperatur.

In der älteren EP-A-0 601 483 werden Pigmente mit vom Betrachtungswinkel abhängiger Farbigkeit beschrieben, die aus orientierten dreidimensional vernetzten Substanzen mit flüssigkristalliner Struktur mit chiraler Phase bestehen.

Aufgabe der Erfindung ist die Bereitstellung umweltfreundlicher, möglichst lösemittelarmer Überzugsmittel, insbesondere Basislacke, die die Herstellung von Überzügen mit neuartigen Farbeffekten erlauben, wobei deren Farbeindruck unabhängig von der Temperatur sein soll.

Es hat sich gezeigt, daß diese Aufgabe gelöst werden kann durch die Verwendung von plättchenförmigen Pigmenten mit vom Betrachtungswinkel abhängiger Farbigkeit, die aus orientierten dreidimensional vernetzten Substanzen flüssigkristalliner Struktur mit chiraler Phase bestehen, in wäßrigen Überzugsmitteln.

Einen Gegenstand der Erfindung bildet daher ein wäßriges Überzugsmittel, enthaltend
- ein oder mehrere wasserverdünnbare Bindemittel,
- ein oder mehrere plättchenförmige Pigmente mit vom Betrachtungswinkel abhängiger Farbigkeit, die aus orientierten, dreidimensional vernetzten Substanzen flüssigkristalliner Struktur mit chiraler Phase bestehen,
- gegebenenfalls einen oder mehrere Vernetzer,
- gegebenenfalls ein oder mehrere farbgebende Absorptionspigmente und/oder Füllstoffe, sowie
- gegebenenfalls lackübliche Additive, wobei unter derartige lackübliche Additive auch organische Lösemittel fallen können.

Die Pigmente mit vom Betrachtungswinkel abhängiger Farbigkeit, die aus orientierten dreidimensional vernetzten Substanzen flüssigkristalliner Struktur mit chiraler Phase bestehen, werden in der Folge als LCP-Pigmente (LCP = liquid crystal polymer) bezeichnet. Die LCP-Pigmente können erhalten werden, indem ein oder mehrere dreidimensional vernetzbare flüssigkristalline Substanzen mit chiraler Phase orientiert werden, danach dreidimensional vernetzt werden und anschließend auf die erwünschte Korngröße zerkleinert werden. Dies kann beispielsweise so geschehen, daß die dreidimensional vernetzbaren flüssigkristallinen Substanzen mit chiraler Phase nach dem Aufbringen auf eine Unterlage in dünner Schicht, beispielsweise durch Aufrakeln, auf dieser Unterlage vernetzt, danach von der Unterlage abgelöst und auf die gewünschte Kornfeinheit zerkleinert werden. Dabei entstehen plättchenförmige Pigmente, die an sich farblos und transparent sind. Durch geeignete chemische Strukturbildungsmaßnahmen bezüglich des molekularen Aufbaus können LCP-Pigmente mit unterschiedlichen wirksamen Interferenzfarben hergestellt werden. Die plättchenförmigen LCP-Pigmente haben bevorzugt einen Durchmesser von 1 bis 100 µm, besonders bevorzugt von 10 bis 60 µm und eine Dicke von bevorzugt 3 bis 15 µm, besonders bevorzugt 5 bis 10 µm. Erfindungsgemäß können beispielsweise solche LCP-Pigmente verwendet werden, wie sie in der EP-A-0 601 483 beschrieben werden, auf die hier Bezug genommen wird. Auch auf die dort beschriebenen Ausgangssubstanzen zur Herstellung der LCP-Pigmente sowie Details zu den Herstellungsverfahren wird hier Bezug genommen.

Nach der EP-A-0 601 483 besitzen flüssigkristalline Substanzen, die als Ausgangssubstanzen für die Herstellung der LCP-Pigmente geeignet sind, eine verdrillte Struktur mit einer Ganghöhe, die einer Wellenlänge des Lichtes im Bereich von UV bis IR entspricht. Diese Struktur findet sich beispielsweise bei cholesterischen Flüssigkristallen. Cholesterische Flüssigkristalle, oder allgemein flüssigkristalline Substanzen mit chiraler Phase, die eine verdrillte Struktur mit einer gewünschten Ganghöhe besitzen, können aus nematischen, smektischen oder diskotischen Strukturen erhalten werden, indem man ihnen eine chirale Substanz zusetzt. Art und Anteil der chiralen Substanz bestimmt die Ganghöhe der verdrillten Struktur und damit die Wellenlänge des reflektierten Lichtes. Die Verdrillung der Struktur kann sowohl links- als auch rechtshändig sein. Die Ausgangssubstanzen müssen zudem polymerisierbare, polykondensierbare oder einer Polyaddition zugängliche Gruppen, von denen zumindest ein Teil in Form di-, tri- oder höherfunktioneller Bausteine vorliegt, enthalten. Beispiele für solche Gruppen sind Methacryloxy- und Acryloxygruppen.

Geeignete Materialien und ihre Herstellung sind beispielsweise in DE-C2-3 604 757, in EP-A2-358 208, in EP-A-0 066 137 (entspricht US 4 388 453) oder in der in D.J. Broer et al. in 14. Int. Liquid Conf., Abstracts II, 921 (1992) genannten Literatur beschrieben.

Bevorzugt geeignet sind dreidimensional vernetzbare Polyorganosiloxane nach EP-A-0 358 208.

Als Ausgangsstoffe zur Herstellung der LCP-Pigmente können jedoch grundsätzlich alle cholesterischen Flüssigkristalle dienen. Es kann eine Art von cholesterischem Flüssigkristall, es kann aber auch ein Gemisch aus mindestens zwei dieser Flüssigkristalle eingesetzt werden. Zusätzlich zu diesen Flüssigkristallen können als weitere Komponenten andere Farbstoffe und/oder Pigmente bei der Herstellung der LCP-Pigmente eingesetzt werden.

Der einzusetzende Farbstoff ist in einer bevorzugten Ausführungsform ein Pigment, z.B. Gasruß. Der einzusetzende Farbstoff ist in einer weiteren bevorzugten Ausführungsform im eingesetzten Flüssigkristall(gemisch) löslich. Vorzugsweise wird kein Gemisch von mehreren cholesterischen flüssigkristallinen Substanzen, sondern eine einzelne reine cholesterische flüssigkristalline Substanz eingesetzt.

Das Zumischen der Pigmente und/oder Farbstoffe zu den übrigen Ausgangssubstanzen erfolgt in üblicher Art und Weise, beispielsweise durch Einrühren. Das Zumischen der Farbstoffe und/oder Pigmente bewirkt im LCP-Pigment eine Kombination der winkelabhängigen Farbeffekte der flüssigkristallinen Substanzen mit dem oder den bekannten Farbeffekten der jeweiligen zugemischten Stoffe. Das Zumischen dieser Stoffe ändert jedoch nichts an den weiteren Verfahrensschritten zur Herstellung der LCP-Pigmente.

Eine jeweils gewünschte LCP-Pigmentfarbe kann auch dadurch erhalten werden, daß definierte Flüssigkristall-Grundmischungen in geeigneten Mengenverhältnissen gemischt werden. Auch in diesem Falle ändern sich die weiteren Verfahrensschritte zur Herstellung der LCP-Pigmente nicht. Die weitere Beschreibung des Herstellungsverfahrens gilt daher für alle Varianten der LCP-Pigmente.

Flüssigkristalle mit verdrillten Phasen bilden ihre optischen Eigenschaften erst dann aus, wenn die einzelnen Moleküle in Schichten angeordnet sind und innerhalb einer Schicht einheitlich geordnet sind. Die Moleküle ändern dabei von Schicht zu Schicht ihre Vorzugsrichtung, so daß schraubenförmige Strukturen entstehen. Um dies zu erreichen, werden die Moleküle mittels bekannter Methoden wie beispielsweise durch Orientierungsschichten oder elektrische oder magnetische Felder orientiert. Solche Methoden sind beispielsweise aus den folgenden Literaturstellen bekannt: CA113 (22), 201523y: CA113 (14), 124523u; CA112 (18), 169216s; CA112 (16), 149138q; CA112 (4), 21552c; CA111 (16), 144258y; CA111 (4), 24780r.

Bei der Herstellung der LCP-Pigmente werden die als Beispiele genannten Ausgangssubstanzen in bekannter Weise orientiert. Dies kann beispielsweise durch Aufrakeln auf eine Metall-, Kunststoff- oder Glasunterlage geschehen. Das Aufrakeln flüssigkristalliner Polyorganosiloxane auf eine Folie ist beispielsweise aus der EP-A-0 358 208 bekannt.

Die Vernetzung der orientierten flüssigkristallinen Substanzen erfolgt, wie für das jeweilige Material aus dem Stand der Technik bekannt. So können beispielsweise flüssigkristalline Polyorganosiloxane nach dem in der EP-A-0 066 137 beschriebenen Verfahren thermisch vernetzt werden.

Die in der EP-A-0 358 208 beschriebenen flüssigkristallinen Polyorganosiloxane lassen sich photochemisch beispielsweise durch Bestrahlen mit UV-Licht dreidimensional vernetzen. Einen Überblick über Verfahren, orientierte Ausgangsstoffe photochemisch zu vernetzen, findet sich bei C.G. Roffey, Photopolymerisation of Surface Coatings, (1982) John Wiley & Sons, Chichester, S. 137 - 208.

Der besondere Farbeindruck der aus den erfindungsgemäßen wäßrigen Überzugsmitteln hergestellten Überzüge ergibt sich durch parallele Ausrichtung der plättchenförmigen LCP-Pigmente in der Überzugsschicht. Aufgrund ihrer regelmäßigen Struktur und der gleichmäßigen molekularen Anordnung innerhalb der flüssigkristallinen Einheiten kommt es zu Interferenzerscheinungen mit dem einfallenden Licht. Der Farbeindruck wechselt abhängig vom Einfallswinkel des Lichtes und zusätzlich vom Betrachtungswinkel. Dies resultiert beispielsweise bei der Betrachtung eines derartig lackierten dreidimensionalen Gegenstandes in einem über das ganze Objekt sich ändernden Farbeindruck.

Das erfindungsgemäße wäßrige Überzugsmittel kann physikalisch trocknend sein oder unter Ausbildung kovalenter Bindungen vernetzbar sein. Bei den unter Ausbildung kovalenter Bindungen vernetzenden Überzugsmitteln kann es sich um selbst- oder fremdvernetzende Systeme handeln. Es können ein- oder zweikomponentige Systeme sein.

Das erfindungsgemäße wäßrige Überzugsmittel enthält wasserverdünnbare Bindemittel. Diese enthalten zur Gewährleistung ihrer Wasserverdünnbarkeit Hydrophilie verleihende nicht-ionische und/oder ionische Gruppen.

Beispiele für geeignete nicht-ionisch stabilisierte Bindemittel sind solche Bindemittel, deren Wasserverdünnbarkeit durch Einbau von Polyethersegmenten in das Harzmolekül erreicht wird. Beispiele für derartig stabilisierte Polyurethan- bzw. Polyurethanacrylatharze sind in EP-A-0 354 261, EP-A-0 422 357 und EP-A-0 424 705 beschrieben.

Bei den wasserverdünnbaren ionische Gruppen tragenden Bindemitteln kann es sich um kationische oder um anionische Gruppen tragende Bindemittel handeln.

Beispiele für geeignete kationisch stabilisierte Bindemittel sind in der DE-A-40 11 633 beschrieben. Es handelt sich um vollständig oder teilweise neutralisierte kationische (Meth)acrylcopolymer-, Polyester-, Polyurethan- und/oder Polyurethanharnstoffharze, insbesondere mit einem Zahlenmittel der Molmasse (Mn) von 500 bis 500000, einer OH-Zahl von 0 bis 450, einer Aminzahl von 20 bis 200 und einer Glasübergangstemperatur von -50 bis +150°C.

Bevorzugt sind Bindemittel, die über anionische Gruppen stabilisiert sind. Es handelt sich dabei um ein oder mehrere filmbildende Harze, wie sie in wäßrigen Überzugsmitteln, insbesondere in wäßrigen Basislacken, üblich sind. Die filmbildenden Harze können beispielsweise Polyester-, (Meth)acrylcopolymer- oder bevorzugt Polyurethanbasis haben. Sie können selbst- oder fremdvernetzend oder physikalisch trocknend sein. Beispiele für geeignete wasserverdünnbare (Meth)acrylcopolymere sind in EP-A-0 399 427 und EP-A-0 287 144 beschrieben.

Beispiele für geeignete wasserverdünnbare Polyesterharze sind in DE-A-29 26 854, DE-A-38 32 142 und EP-A-0 301 300 beschrieben.

Es ist auch möglich Gemische von Bindemitteln einzusetzen. Besonders geeignete Bindemittel sind solche, in denen (Meth)acrylcopolymer und Polykondensationsharz kovalent oder in Form interpenetrierender Harzmoleküle verbunden vorliegen. Beispiele für eine verwendbare derartige Kombination von (Meth)acrylcopolymer und Polyesterharz sind in der EP-A-O 226 171 beschrieben.

Beispiele für die besonders bevorzugten anionisch stabilisierten Polyurethanharze sind in der Literatur in großer Vielfalt beschrieben. Es handelt sich dabei um wäßrige Polyurethandispersionen oder -lösungen oder um solche Bindemittel, in denen (Meth)acrylcopolymer und Polyurethanharz kovalent oder in Form interpenetrierender Harzmoleküle verbunden vorliegen. Geeignete Polyurethandispersionen sind stabile, wäßrige Dispersionen mit einem Festkörper von 20 bis 50 Gew.-%. Das Gewichtsmittel der Molmasse (Mw) der Harze kann in weiten Grenzen schwanken, z.B. von 1000 bis 500000.

Weitere Beispiele für verwendbare Polyurethandispersionen sind solche, die durch Kettenverlängerung isocyanatfunktioneller Prepolymerer mit Polyamin und/oder Polyol hergestellt werden können. Sie werden beispielsweise in den EP-A-0 089 497, EP-A-0 228 003, DE-A-36 28 124 und EP-A-0 512 524 beschrieben.

Weitere Beispiele sind Polyurethandispersionen, die durch Kettenverlängerung isocyanatfunktioneller Prepolymerer mit Wasser hergestellt werden können, wie z.B. in der DE-A-39 15 459 und der DE-A-42 24 617 dargestellt.

Es können auch Polyurethandispersionen verwendet werden, die durch Kettenverlängerung von gegenüber Polyisocyanaten reaktiven, aktiven Wasserstoff enthaltenden Polyurethanprepolymeren mit Polyisocyanaten hergestellt werden, wie z.B. in DE-A-39 03 804 und DE-A-40 01 841 beschrieben.

Weitere Beispiele für verwendbare anionisch stabilisierte Polyurethan (PU)-Dispersionen sind in der DE-A-42 28 510 beschrieben. Dabei handelt es sich um wäßrige Polyurethanharzdispersionen, die erhältlich sind durch Kettenverlängerung von
- einem oder mehreren Polyurethanharzen, die mindestens eine CH-acide Gruppe im Molekül enthalten, durch Umsetzung in wäßrigem oder nicht-wäßrigem Medium, mit
- mindestens einer Verbindung, die mit mindestens zwei CH-aciden Gruppen reagieren kann und
- gegebenenfalls Überführen eines im nicht-wäßrigen Medium erhaltenen Reaktionsproduktes in die wäßrige Phase.

Beispiele für anionisch stabilisierte polyurethanbasierende Bindemittel, in denen (Meth)acrylcopolymer und Polyurethanharz kovalent oder in Form interpenetrierender Harzmoleküle verbunden vorliegen, sind z.B. in den EP-A-0 353 797, EP-A-0 297 576, DE-A-41 22 265 und DE-A-41 22 266 beschrieben. Es handelt sich um Polymerhybride, die durch Emulsionspolymerisation radikalisch polymerisierbarer Monomerer in Gegenwart von anionisch stabilisierten Polyurethanen, die gegebenenfalls auch ungesättigt funktionalisiert sind, hergestellt werden.

Die erfindungsgemäßen Überzugsmittel können ein wäßriges Bindemittel enthalten, es können aber auch mehrere wäßrige Bindemittel in Kombination vorliegen. Bevorzugt sind in den erfindungsgemäßen wäßrigen Überzugsmitteln wäßrige Bindemittel auf Basis anionisch stabilisierter Polyurethane enthalten. Es kann zweckmäßig sein, wenn ein Teil, z.B. bis zu 50 Gew.-%, der Polyurethan-Bindemittel durch Harze auf Basis einer Kombination aus (Meth)acrylcopolymer und Polyesterharz ersetzt wird.

Weiterhin können wasserverdünnbare Bindemittel auf Cellulosebasis enthalten sein.

Zur Bereitung der erfindungsgemäßen wäßrigen Überzugsmittel können, insbesondere wenn die eingesetzten Bindemittel nicht selbstvernetzend sind, verschiedene Vernetzer, wie beispielsweise Formaldehyd-Kondensationsharze, wie Phenol-Formaldehydkondensationsharze und Amin-Formaldehydkondensationsharze, sowie freie oder blockierte Polyisocyanate verwendet werden. Die Vernetzer können einzeln oder im Gemisch eingesetzt werden. Das Mischungsverhältnis Vernetzer zu Bindemittelharz beträgt bevorzugt 10 : 90 bis 40 : 60, besonders bevorzugt 20 : 80 bis 30 : 70, jeweils bezogen auf das Festkörpergewicht.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Beispiele für derartige Harze und ihre Herstellung werden in "Houben-Weyl, Methoden der organischen Chemie" 1963, Seite 357, beschrieben. Diese Produkte sind im Handel erhältlich.

Als Vernetzungsmittel können auch freie oder blockierte Polyisocyanate eingesetzt werden. Bei den Polyisocyanaten handelt es sich um beliebige organische Di- und/oder Polyisocyanate mit aliphatisch, cycloaliphatisch, araliphatisch und/oder weniger bevorzugt aromatisch gebundenen freien Isocyanatgruppen, die bei Raumtemperatur flüssig sind oder durch Zusatz organischer Lösemittel verflüssigt sind oder in gelöster Form bei 23°C im allgemeinen eine Viskosität von 0,5 bis 2000 mPas, vorzugsweise über 1 und unter 1000 mPas, besonders bevorzugt unter 200 mPas aufweisen. Als Diisocyanate sind solche bevorzugt, die etwa 3 bis etwa 36, insbesondere etwa 8 bis 15 Kohlenstoffatome enthalten. Beispiele für geeignete Diisocyanate sind Hexamethylendiisocyanat, Tetramethylxylylendiisocyanat, Isophorondiisocyanat, Dicyclohexylmethandiisocyanat.

Bevorzugt werden Polyisocyanate mit höherer Isocyanatfunktionalität verwendet, beispielsweise durch Di- und/oder Trimerisierung vorstehend genannter Diisocyanate hergestellte Polyisocyanate. Weitere Beispiele sind durch Umsetzung der vorstehend genannten Diisocyanate mit Wasser hergestellte Biuretgruppen enthaltende Polyisocyanate oder durch Umsetzung mit Polyolen hergestellte Urethangruppen enthaltende Polyisocyanate.

Im Falle der blockierten Polyisocyanate können beliebige für die Vernetzung geeignete organische Polyisocyanate, z.B. die vorstehend genannten, benutzt werden, bei denen die Isocyanatgruppen mit einer Verbindung umgesetzt worden sind, so daß das gebildete blockierte Polyisocyanat gegenüber Hydroxylgruppen und Wasser bei Raumtemperatur beständig ist, bei erhöhten Temperaturen, in der Regel im Bereich von etwa 90 bis etwa 250°C, aber reagiert.

Die blockierten Polyisocyanate, die als Vernetzer eingesetzt werden können, können mit üblichen flüchtigen einwertigen Blockierungsmitteln blockiert sein, wie sie z.B. in der Lackchemie eingesetzt werden. Beispiele hierfür sind verschiedene Alkohole, Oxime, Phenole, Amine, beta-Ketoverbindungen, Phthalimid usw. Die Polyisocyanate können innerhalb eines Moleküls mit gleichen oder verschiedenen Blockierungsmitteln blockiert sein. Als Vernetzer können auch Gemische unterschiedlich blockierter Polyisocyanate verwendet werden, sowie auch Polyisocyanate, die intramolekular unterschiedlich blockiert sind.

Weiterhin können die erfindungsgemäßen Überzugsmittel dem Fachmann bekannte, auf dem Lacksektor übliche Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die wäßrigen Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Es können beispielsweise auch Antiabsetzmittel, Verlaufsmittel, Lichtschutzmittel (beispielsweise vom HALS-Typ, vom Benztriazol-Typ, Mikrotitandioxid), Antischaummittel, wie beispielsweise silikonhaltige Verbindungen, Netzmittel sowie haftvermittelnde Substanzen eingesetzt werden. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Zur Beschleunigung der Härtung können gegebenenfalls Katalysatoren eingesetzt werden.

Als Lösemittel, die in geringen Mengen vorhanden sein können, sind übliche lacktechnische Lösungsmittel geeignet, diese können aus der Herstellung der Bindemittel stammen oder werden separat zugegeben. Beispiele für solche Lösungsmittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C₁- bis C₆-Alkyl, Ethoxypropanol, Butylglykol; Glykole, z.B. Ethylenglykol, Propylenglykol und deren Oligomere, N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte, aliphatische C₆- bis C₁₂-Kohlenwasserstoffe.

Über die Auswahl der Lösungsmittel kann der Verlauf sowie die Viskosität des Überzugsmittels beeinflußt werden. Über den Siedepunkt der eingesetzten Lösungsmittelmischung kann das Abdunstverhalten beeinflußt werden.

Das erfindungsgemäße Überzugsmittel enthält mindestens ein LCP-Pigment und gegebenenfalls ein oder mehrere anorganische und/oder organische farbgebende Absorptionspigmente, gegebenenfalls einen oder mehrere Füllstoffe, sowie gegebenenfalls einen oder mehrere lösliche organische Farbstoffe. Das erfindungsgemäße Überzugsmittel enthält neben den LCP-Pigmenten keine weiteren Effektpigmente. Die Absorptionspigmente und Farbstoffe sind bevorzugt dunkler Natur, da der erfindungsgemäß angestrebte besondere Farbeffekt dann besonders verstärkt wird. Die Absorptionspigmente und Farbstoffe können bezüglich ihres Farbtons der wirksamen Interferenzfarbe des LCP-Pigments angepaßt sein oder sich davon unterscheiden. Bevorzugt enthält das erfindungsgemäße Überzugsmittel nur ein LCP-Pigment oder eine Mischung von LCP-Pigmenten unterschiedlicher wirksamer Interferenzfarben und keine zusätzlichen Farbstoffe oder Absorptionspigmente. Über die Mischung mehrerer LCP-Pigmente unterschiedlicher wirksamer Interferenzfarben sind der Einstellung aller denkbaren Farbschattierungen keine Grenzen gesetzt.

Zur Einarbeitung in die erfindungsgemäßen Überzugsmittel werden die pulverförmigen LCP-Pigmente zunächst mit bevorzugt wasserverdünnbaren organischen Lösemitteln und Additiven zu einer Paste verarbeitet. Es kann zweckmäßig sein bei der Herstellung der Paste wasserverdünnbare Bindemittel, beispielsweise die vorstehend beschriebenen und/oder ein übliches Pastenharz zuzusetzen. Es ist darauf zu achten, daß die plättchenförmigen LCP-Pigmente beim Vermischen nicht mechanisch beschädigt werden.

Beispiele für farbgebende Absorptionspigmente und/oder Füllstoffe, die organischer oder anorganischer Natur sein können, sind Titandioxid, Eisenoxidpigmente, Ruß, Siliziumdioxid, Bariumsulfat, Talkum, Azopigmente, Phthalocyaninpigmente, Chinacridon- oder Pyrrolopyrrolpigmente.

Die farbgebenden Absorptionspigmente und/oder Füllstoffe werden im allgemeinen in einem Teil der wasserverdünnbaren Bindemittel angerieben. Bevorzugt kann das Anreiben auch in einem speziellen wasserverdünnbaren Pastenharz geschehen. Ein Beispiel für ein im erfindungsgemäßen Überzugsmittel bevorzugt einsetzbares Pastenharz auf Basis eines anionisch stabilisierten Polyurethanharzes findet sich in der DE-A-40 00 889. Das Anreiben geschieht in üblichen dem Fachmann bekannten Aggregaten. Danach wird mit dem restlichen Anteil des wäßrigen Bindemittels oder des wäßrigen Pastenharzes zur fertigen Farbpigmentanreibung komplettiert.

Sind in dem Überzugsmittel Pastenharze vorhanden, so addieren sich diese zu Bindemittel plus gegebenenfalls vorhandenem Vernetzer.

Handelt es sich bei den erfindungsgemäßen Überzugsmitteln um solche, die auf Basis kationisch stabilisierter Bindemittel formuliert sind, so enthalten diese Säuren als Neutralisationsmittel. Beispiele sind Ameisensäure, Essigsäure und Milchsäure.

Handelt es sich bei den erfindungsgemäßen Überzugsmitteln um solche, die auf Basis anionisch stabilisierter Bindemittel formuliert sind, so enthalten diese Basen als Neutralisationsmittel. Beispiele sind Ammoniak oder organische Amine wie Triethylamin, N-Methylmorpholin, Aminoalkohole wie Dimethylisopropanolamin, Dimethylethanolamin, 2-Amino-2-methylpropanol-1.

Das erfindungsgemäße Überzugsmittel kann auch in der Form sogenannter Module bereitgestellt werden, aus denen es letztlich durch Vermischen unmittelbar vor der Anwendung bereitet wird. So können die LCP-Pigmente beispielsweise Bestandteil eines Effektmoduls sein. Weiterhin können beispielsweise die wasserverdünnbaren Bindemittel Bestandteil eines Bindemittelmoduls und gegebenenfalls eines separat davon bereitgestellten Effektmoduls und/oder Farbmoduls sein. Die Vernetzer können beispielsweise Bestandteil eines Vernetzermoduls sein. Weitere Bestandteile können in Form weiterer getrennter Module vorliegen. Ein Beispiel für ein derartiges Modulsystem ist in der EP-A-0 608 773 der gleichen Anmelderin beschrieben.

Das erfindungsgemäße Überzugsmittel, beispielsweise ein erfindungsgemäßer Wasserbasislack, besitzt beispielsweise einen Festkörpergehalt von 10 bis 50 Gew.-%, bevorzugt von 15 bis 30 Gew.-%. Das Verhältnis von Gesamt-Pigment zu Bindemittel im erfindungsgemäßen Wasserbasislack beträgt bevorzugt 0,03 : 1 bis 1 : 1, besonders bevorzugt zwischen 0,06 : 1 und 0,6 : 1, jeweils bezogen auf das Festkörpergewicht. Das LCP-Pigment/Bindemittel-Verhältnis im erfindungsgemäßen Überzugsmittel beträgt bevorzugt 0,03 : 1 bis 0,5 : 1, besonders bevorzugt 0,06 : 1 bis 0,25 : 1. Bei den vorstehenden Verhältnis-Angaben beinhaltet der Ausdruck Bindemittel das Bindemittel als solches plus gegebenenfalls vorhandenem Vernetzer plus gegebenenfalls vorhandenem Pastenharz.

Der Lösemittelanteil der erfindungsgemäßen Überzugsmittel beträgt unter 20 Gew.-%, bevorzugt unter 15 Gew.-%, besonders bevorzugt unter 10 Gew.-%.

Die erfindungsgemäßen Überzugsmittel können nach üblichen Methoden appliziert werden. Bevorzugt werden sie durch Spritzen in einer Trockenschichtdicke von beispielsweise 15 bis 40 µm appliziert. Bei der Anwendung als Wasserbasislack erfolgt die Applikation bevorzugt im Naß-in-Naß-Verfahren, d.h. nach einer Ablüftphase, z.B. bei 20 bis 80°C, können die Wasserbasislackschichten mit einem üblichen Klarlack in einer Trockenschichtdicke von bevorzugt 30 bis 80 µm überlackiert und gemeinsam mit diesem bei Temperaturen von beispielsweise 20 bis 140°C getrocknet oder vernetzt werden. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind im allgemeinen Temperaturen über 80°C, beispielsweise über 100°C bevorzugt. Als Klarlack sind grundsätzlich alle bekannten Klarlacke oder transparent pigmentierten Überzugsmittel geeignet. Hierbei können sowohl lösungsmittelhaltige Einkomponenten (1K)- oder Zweikomponenten (2K)-Lacke, wasserverdünnbare Klarlacke oder Pulverklarlacke eingesetzt werden. Es kann zweckmäßig sein, die Klarlackschichtdicke im Bereich über 50 µm zu wählen, beispielsweise durch Auftrag zweier Klarlackschichten aus gleichen oder verschiedenen Flüssigklarlacken oder einer entsprechenden Pulverklarlackschicht. Diese Mehrschichtlackierungen können auf verschiedene Arten von Substraten aufgebracht werden. Im allgemeinen handelt es sich um metallische oder Kunststoffuntergründe. Diese sind häufig vorbeschichtet, d.h. Kunststoffsubstrate können z.B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z.B. eine Füllerschicht. Diese Schichten sind im allgemeinen ausgehärtet.

Als Wasserbasislack kann das erfindungsgemäße Überzugsmittel jedoch auch auf unvernetzte Füllerschichten, wie z.B. in EP-A-0 238 037 beschrieben, naß-in-naß appliziert werden. In diesem Fall wird der Basislack im allgemeinen vor Auftrag einer Klarlackdeckschicht gemeinsam mit der Füllerschicht eingebrannt.

Bevorzugt handelt es sich bei den mit dem erfindungsgemäßen Überzugsmittel überzulackierenden Untergründen um dunkle Untergründe. Unter Untergrund ist in diesem Zusammenhang nicht nur ein an seiner Oberfläche mit einer dunklen Lackschicht versehenes Substrat zu verstehen, sondern auch ein in sich dunkel pigmentiertes Substrat, beispielsweise Kunststoffsubstrat. Beispiele für dunkle Lackschichten sind Grundierungen, z.B. elektrophoretisch oder durch Spritzlackierung aufgebrachte Grundierungen, Kunststoffgrundierungen, Füller- oder Steinschlagschutzschichten, aber auch unifarbene Basis- oder Decklackschichten. Die dunklen Substrate oder dunklen Lackschichten sind mit dunklen Absorptionspigmenten pigmentiert, wobei Effektpigmente ausdrücklich ausgeschlossen sind. Beispiele für dunkle Untergründe sind dunkelblau, dunkelrot, dunkelgrün oder bevorzugt dunkelgrau, besonders bevorzugt jedoch ist schwarz. In diesen Fällen tritt der mit dem erfindungsgemäßen Überzugsmittel zu erzielende Effekt in besonderem Maße hervor. Die erfindungsgemäßen Überzugsmittel können natürlich auch auf hellere Untergründe appliziert werden, jedoch wird der erfindungsgemäß angestrebte besondere Farbeffekt dann nur abgeschwächt wirksam.

Das erfindungsgemäße Überzugsmittel erlaubt die Herstellung farbbrillanter Mehrschichtlackierungen mit überraschend stark ausgeprägtem Farbflop. Der Farbeindruck der fertig lackierten Substrate wechselt in Abhängigkeit vom Einfallswinkel des Lichtes und zusätzlich vom Betrachtungswinkel, ist jedoch unabhängig von äußeren Temperatureinflüssen.

Die erfindungsgemäßen wäßrigen Überzugsmittel entsprechen heutigen Umweltanforderungen, die mit ihnen erhaltenen Mehrschichtlackierungen entsprechen den heute üblichen Anforderungen in der Kraftfahrzeuglakkierung. Die erfindungsgemäßen wäßrigen Überzugsmittel sind somit geeignet für die Fahrzeugerstlackierung und -reparaturlackierung, insbesondere als Wasserbasislack, sie können jedoch auch in anderen Bereichen, z.B. der Kunststofflackierung, insbesondere der Fahrzeugteilelackierung, eingesetzt werden.

### Beispiel 1:

### Polyorganosiloxane mit methacryloylfunktionellen Seitenketten

Eine Lösung aus 233 g 4-(Prop-2-en-1-oxy)benzoesäurecholesterinester (erhältlich gemäß DE-A-3 110 048), 178 g 4-(Prop-2-en-1-oxy)benzoesäure-(4-trimethylsiloxyphenyl)ester (erhältlich gemäß EP-A-0 358 208, Seite 9, Abschnitt C) und 56,9 g Tetramethylcyclotetrasiloxan in 400 ml Toluol wurde in Gegenwart von 24 mg Dicyclopentadienplatindichlorid 1 Stunde und nach Zusatz einer Lösung von 1,2 g NaOH in 50 ml Ethanol weitere 7 Stunde unter Rückfluß gekocht, um den Silylether zu spalten. Die Reaktionsmischung wurde auf 1/3 ihres Volumens im Rotationsverdampfer eingeengt, mit 7,5 g p-Toluolsulfonsäure und 154 g Methacrylsäureanhydrid versetzt und 1 Stunde auf 100°C erwärmt. Nach dem Abdestillieren der flüchtigen Bestandteile wurde zweimal mit Methylenchlorid/Ethanol umgefällt.

Das Produkt hatte folgende physikalische und thermodynamische Daten: Glaspunkt: 14°C, Klarpunkt: 141°C.

### Beispiel 2:

### Darstellung eines polymerisierbaren Monomeren

### Methacryloxybenzoesäure(4-ethylphenyl)ester

Eine Lösung von 16,9 g 4-Trimethylsilyloxybenzoesäure(4-ethylphenyl)-ester (hergestellt analog der Vorschrift in EP-A-0 358 208, Seite 9, Abschnitt C) in 15 ml Toluol und 10 ml Ethanol wurde eine Stunde unter Rückfluß gekocht und anschließend durch Erhitzen auf 100°C für 60 Minuten von flüchtigen Bestandteilen befreit. Die verbliebenen 13,3 g 4-Hydroxybenzoesäure(4-ethyl)phenylester wurden zusammen mit 30 g Methacrylsäureanhydrid und 1,2 g Toluolsulfonsäure in 15 ml Toluol gelöst und 1 Stunde auf 100°C erwärmt. Nach dem Abkühlen wurde das Produkt mit Hexan ausgefällt und aus Ethanol umkristalliert.

### Beispiel 3:

### Herstellung einer roten Flüssigkristallmischung

6 g des Polyorganosiloxans, hergestellt wie in Beispiel 1, wurden in 50 ml Toluol gelöst. Dieser Lösung wurden 1,5 g Methacryloxybenzoesäure(4-ethyl-phenyl)ester (hergestellt wie in Beispiel 2) und 7,5 mg Aluminiumkupferron (erhältlich unter der Bezeichnung Q 1301 bei Wako Chemicals GmbH, Neuss) zugegeben. Das Toluol wurde dann unter Vakuum bei 70°C im Rotationsverdampfer entfernt.

Es entsteht eine zähflüssige LC-Masse mit folgenden physikalischen und thermodynamischen Daten:
Glaspunkt: -2°C, Klarpunkt: 124°C.

### Beispiel 4:

### Herstellung einer blauen Flüssigkristallmischung

Wie in Beispiel 1 beschrieben, wurden 6 g des Polyorganosiloxans hergestellt. Dieses wurde in 50 ml Toluol gelöst. Dieser Lösung wurden 2,6 g Methacrylsäurecholesterinester (hergestellt wie in De Visser et al., J. Polym. Sci., A 1(9), 1893 (1971) beschrieben) und 9 mg Aluminiumkupferron (erhältlich unter der Bezeichnung Q 1301 von Wako Chemicals GmbH, Neuss) zugegeben. Das Toluol wurde dann unter Vakuum bei 70°C im Rotationsverdampfer entfernt.

Es entstand eine zähflüssige LC-Masse mit folgenden physikalischen und thermodynamischen Daten:
Glaspunkt: 4°C, Klarpunkt: 132°C.

### Beispiel 5

### A) Herstellung einer grünen Flüssigkristallmischung

2,8 g der roten Farbmischung (hergestellt wie in Beispiel 3 beschrieben), 1,2 g der blauen Farbmischung (hergestellt wie in Beispiel 4 beschrieben) und 0,11 g 2-Methyl-1-[4-(methylthio)phenyl]-2-morpholino-1-propanon (erhältlich unter der Bezeichnung Irgacure® 907 der Ciba Marienberg GmbH, Bensheim) wurden unter Umrühren homogen vermischt.

Man erhält eine grünlich schimmernde, zähflüssige LC-Masse mit folgenden thermodynamischen Daten:
Glaspunkt: 2°C, Klärpunkt: 128°C.

### B) Darstellung eines LCP-Pigments

4 g der LC-Masse, hergestellt wie vorstehend unter A) beschrieben, wurden auf 70°C erwärmt und mit 0,11 g 2-Methyl-1-[4-(methyl-thio)phenyl]-2-morpholino-1-propanon (erhältlich unter der Bezeichnung Irgacure® 907 bei Ciba Marienberg GmbH, Bensheim) unter Umrühren homogen vermischt. Das flüssigkristalline Material wurde bei 80°C mit Hilfe einer Rakel auf eine Polyethylenterephthalatfolie (Hoechst AG, Geschäftsbereich Folien, Wiesbaden) in Schichtdicken von 7 Mikrometern aufgetragen, wobei die Folie unter der fixierten Rakel mit einer Laufgeschwindigkeit von etwa 2 Meter pro Minute fortbewegt wurde. Gleichzeitig erfolgte aufgrund des Schergefälles zwischen Rakel und Folie die Orientierung der flüssigkristallinen Moleküle. Anschließend wurde diese Schicht mit Hilfe einer Quecksilberentladungslampe (80 Watt/cm) 5 Sekunden bestrahlt und so dreidimensional vernetzt. Der auf der Folie entstandene Film war im heißen und kalten Zustand klebfrei und spröde. Er hatte eine Reflektionswellenlänge von 530 Nanometer (Einfallswinkel und Beobachtungswinkel 45°). Die mechanische Abtrennung des auf diese Weise erhaltenen flüssigkristallinen Materials von der Unterlage wurde dadurch erreicht, daß die Folie über eine Umlenkrolle mit 10 cm Durchmesser geführt wurde und so das vernetzte Material vom Träger abblättert. Das Mahlen des vernetzten, substratfreien Materials wurde in einer Universalmühle durchgeführt. Durch fünfminütiges Mahlen der überwiegend in Blättchenform (Große: einige Millimeter bis Zentimeter) anfallenden vernetzten Polyorganosiloxane entstand eine pulverförmige Fraktion. Das Mahlgut wurde dann zur Verengung der Korngrößenverteilung einem Siebprozeß unterworfen.

### Beispiel 6:

### Herstellung eines Bindemittelmoduls

Nachfolgend genannte Bestandteile werden unter Rühren gut miteinander vermischt:

| | |
|---|---|
| 26,2 | Teile einer PU-Dispersion gemäß DE-A-4 224 617, Herstellungsbeispiel 3, |
| 8,8 | Teile Hexamethoxymethylmelamin, |
| 5 | Teile n-Butanol, |
| 3,5 | Teile eines handelsüblichen Verdickers auf Polyacrylsäurebasis, |
| 0,25 | Teile N,N-Dimethylethanolamin, |
| 56,25 | Teile deionisiertes Wasser. |

### Beispiel 7:

### Herstellung eines LCP-Effektmoduls

Folgende Bestandteile sind im LCP-Effektmodul enthalten:

| | |
|---|---|
| 35 | Teile der PU-Dispersion aus Beispiel 6, |
| 12 | Teile des LCP-Pigmentes gemäß Beispiel 5 B (Korngrößenfraktion: 1 - 100 µm), |
| 25 | Teile Butylglykol, |
| 1,8 | Teile des Verdickers aus Beispiel 6, |
| 0,2 | Teile N,N-Dimethylethanolamin. |

Die LCP-Pigmente werden mit Lösemittel und Additiven angepastet. Anschließend wird das Bindemittel dazugegeben und gut vermischt. Danach wird mit 24 Teilen deionisierten Wassers verdünnt.

### Beispiel 8:

### Herstellung eines wäßrigen LCP-Effektbasislackes

80 Teile des Bindemittelmoduls aus Beispiel 6 und 20 Teile des LCP-Effektmoduls aus Beispiel 7 wurden durch gleichmäßiges Vermischen zu lagerstabilen, wäßrigen Effektbasislacken fomuliert.

### Beispiel 9:

### Herstellung einer Mehrschichtlackierung

Der wäßrige LCP-Effektbasislack aus Beispiel 8 wird auf übliche, phosphatierte und durch kathodische Tauchlackierung und mit einem schwarzen Füller vorbeschichtete Karosseriebleche durch Spritzen in einer Trockenschichtdicke von 20 Mikrometer aufgebracht. Nach der Applikation wird bei Raumtemperatur 10 Minuten abgelüftet und anschließend 10 Minuten bei 80°C vorgetrocknet. Anschließend wird ein handelsüblicher 2K-Polyurethanklarlack auf Acrylatharzbasis in einer Trockenschichtdicke von 50 Mikrometer überlackiert und 30 Minuten bei 100°C (Objekttemperatur) getrocknet.

Man erhält eine Mehrschichtlackierung mit einem extrem stark ausgeprägten Farbflop, dessen Farbumschlag von grün nach blau liegt.

## Patentansprüche

1. Wäßrige Überzugsmittel, enthaltend ein oder mehrere wasserverdünnbare Bindemittel, ein oder mehrere plättchenförmige Pigmente mit vom Betrachtungswinkel abhängiger Farbigkeit, die aus orientierten, dreidimensional vernetzten Substanzen flüssigkristalliner Struktur mit chiraler Phase bestehen, gegebenenfalls einen oder mehrere Vernetzer, gegebenenfalls ein oder mehrere farbgebende Absorptionspigmente und/oder Füllstoffe, sowie gegebenenfalls lackübliche Additive.

2. Wäßrige Überzugsmittel nach Anspruch 1, worin die wasserverdünnbaren Bindemittel kationisch stabilisierte Harze auf der Basis von (Meth)acrylcopolymerharzen, Polyesterharzen, Polyurethanharzen und/oder Polyurethan-Harnstoffharzen sind.

3. Wäßrige Überzugsmittel nach Anspruch 2, worin die wasserverdünnbaren Harze ein Zahlenmittel der Molmasse (Mn) von 500 bis 500000, eine Hydroxylzahl von 0 bis 450, eine Aminzahl von 20 bis 200 und eine Glasübergangstemperatur von -50 bis +150°C aufweisen.

4. Wäßrige Überzugsmittel nach Anspruch 1, worin die wasserverdünnbaren Bindemittel anionisch stabilisierte Harze auf der Basis von (Meth)acrylcopolymerharzen, Polyesterharzen und/oder Polyurethanharzen sind.

5. Wäßrige Überzugsmittel nach Anspruch 4, worin die wasserverdünnbaren Harze ein Gewichtsmittel der Molmasse von 1000 bis 500000 aufweisen.

6. Wäßrige Überzugsmittel nach einem der vorhergehenden Ansprüche, die als Vernetzer Formaldehyd-Kondensationsharze und/oder freie oder blockierte Polyisocyanate enthalten.

7. Wäßrige Überzugsmittel nach Anspruch 6, worin das Mischungsverhältnis von Vernetzer zu Bindemittelharz 10 : 90 bis 40 : 60, bezogen auf das Festkörpergewicht, beträgt.

8. Wäßriges Überzugsmittel nach einem der vorhergehenden Ansprüche mit einem Festkörpergehalt von 10 bis 50 Gew.-%, einem Pigment/Bindemittel plus gegebenenfalls Vernetzer-Verhältnis von 0,03 : 1 bis 1 : 1, einem Verhältnis von plättchenförmigem Pigment auf der Basis dreidimensional vernetzter Substanzen flüssigkristalliner Struktur zu Bindemittel plus gegebenenfalls Vernetzer von 0,03 : 1 bis 0,5 : 1, jeweils bezogen auf das Festkörpergewicht und einem Lösemittelgehalt unter 20 Gew.-%.

9. Verfahren zur Mehrschichtlackierung von Substraten durch Auftrag eines Basislack/Klarlack-Systems auf ein gegebenenfalls vorbeschichtetes Substrat, dadurch gekennzeichnet, daß als Basislack ein Überzugsmittel nach einem der Ansprüche 1 bis 8 aufgetragen und gegebenenfalls naß-in-naß mit einem Klarlack beschichtet wird.

10. Verfahren nach Anspruch 9, dadurch gekennzeichnet, daß der Basislack auf ein dunkles oder mit einer dunklen Überzugsschicht versehenes Substrat aufgetragen wird.

11. Verfahren nach Anspruch 9 oder 10, dadurch gekennzeichnet, daß es zur Mehrschichtlackierung von Kraftfahrzeugen oder deren Teilen verwendet wird.

12. Verwendung von einem oder mehreren plättchenförmigen Pigmenten mit vom Betrachtungswinkel abhängiger Farbigkeit, die aus orientierten, dreidimensional vernetzten Substanzen flüssigkristalliner Struktur mit chiraler Phase bestehen, in wäßrigen Überzugsmitteln, insbesondere in wäßrigen Basislacken für Mehrschichtlackierungen.

## Claims

1. Aqueous coating compositions comprising one or more water-dilutable binders, one or more plateletlike pigments whose colour depends on the viewing angle, which consist of oriented, three-dimensionally crosslinked substances of liquid-crystalline structure with a chiral phase, if desired one or more crosslinking agents, if desired one or more colour-imparting absorption pigments and/or fillers, and also, if desired, customary paint additives.

2. Aqueous coating compositions according to Claim 1, wherein the water-dilutable binders are cationically stabilized resins based on (meth) acrylic copolymer resins, polyester resins, polyurethane resins and/or polyurethane-urea resins.

3. Aqueous coating compositions according to Claim 2, wherein the water-dilutable resins have a number-average molar mass (Mn) of from 500 to 500,000, a hydroxyl number of from 0 to 450, an amine number of from 20 to 200 and a glass transition temperature of from -50 to +150°C.

4. Aqueous coating compositions according to Claim 1, wherein the water-dilutable binders are anionically stabilized resins based on (meth)acrylic copolymer resins, polyester resins and/or polyurethane resins.

5. Aqueous coating compositions according to Claim 4, wherein the water-dilutable resins have a weight-average molar mass of from 1000 to 500,000.

6. Aqueous coating compositions according to any one of the preceding claims, which, as crosslinking agent, comprise formaldehyde condensation resins and/or free or blocked polyisocyanates.

7. Aqueous coating compositions according to Claim 6, wherein the mixing ratio of crosslinking agent to binder resin is from 10:90 to 40:60, based on the weight of solids.

8. Aqueous coating composition according to any one of the preceding claims, which has a solids content of from 10 to 50% by weight, a pigment/binder plus, if appropriate, crosslinking agent ratio of from 0.03:1 to 1:1, a ratio of plateletlike pigment based on three-dimensionally crosslinked substances of liquid-crystalline structure to binder plus, if appropriate, crosslinking agent of from 0.03:1 to 0.5:1, based in each case on the weight of solids, and a solvent content of below 20% by weight.

9. Process for the multicoat painting of substrates by applying a basecoat/clearcoat system to an uncoated or precoated substrate, characterized in that the basecoat applied is a coating composition according to any one of Claims 1 to 8 and this basecoat is coated, if desired, wet-on-wet with a clearcoat.

10. Process according to Claim 9, characterized in that the basecoat is applied to a dark substrate or to a substrate which is provided with a dark coating film.

11. Process according to Claim 9 or 10, characterized in that it is used for the multicoat finishing of motor vehicles or painting of parts thereof.

12. The use of one or more plateletlike pigments whose colour depends on the viewing angle, which consist of oriented, three-dimensionally crosslinked substances of liquid-crystalline structure with a chiral phase, in aqueous coating compositions, especially in aqueous basecoats for multicoat paint systems.

## Revendications

1. Produit de revêtement aqueux, contenant un ou plusieurs liants diluables dans l'eau, un ou plusieurs pigments en paillettes dont la couleur dépend de l'angle d'observation, qui consistent en des substances réticulées orientées, tridimensionnelles, à structure de type cristal liquide avec une phase chirale, le cas échéant un ou plusieurs agents réticulants, le cas échéant un ou plusieurs pigments d'absorption chromophores et/ou des charges, ainsi que, éventuellement, des additifs habituels pour vernis.

2. Produit de revêtement aqueux suivant la revendication 1, dans lequel les liants diluables dans l'eau sont des résines, stabilisées par des cations, à base de résines copolymère (méth)acrylique, de résines de polyester, de résines de polyuréthanne et/ou de résines de polyuréthanne-urée.

3. Produit de revêtement aqueux suivant la revendication 2, dans lequel les résines diluables dans l'eau ont une masse molaire moyenne en nombre (Mn) de 500 à 500 000, un indice d'hydroxyle de 0 à 450, un indice d'amine de 20 à 200 et une température de transition vitreuse de -50 à +150°C.

4. Produit de revêtement aqueux suivant la revendication 1, dans lequel les liants diluables dans l'eau sont des résines, stabilisées par des anions, à base de résines copolymère (méth)acrylique, de résines de polyester et/ou de résines de polyuréthanne.

5. Produit de revêtement aqueux suivant la revendication 4, dans lequel les résines diluables dans l'eau ont une masse molaire moyenne en poids de 1000 à 500 000.

6. Produit de revêtement aqueux suivant l'une quelconque des revendications précédentes, qui comprend comme agent réticulant des résines de condensation du formaldéhyde et/ou des polyisocyanates libres ou bloqués.

7. Produit de revêtement aqueux suivant la revendication 6, dans lequel le rapport du mélange de l'agent réticulant à la résine liante est de 10:90 à 40:60, par rapport au poids des matières solides.

8. Produit de revêtement aqueux suivant l'une quelconque des revendications précédentes, ayant une teneur en matières solides de 10 à 50% en poids, un rapport pigments/liant plus éventuellement agent réticulant de 0,03:1 à 1:1, un rapport du pigment en paillettes à base de substances réticulées, tridimensionnelles, à structure de type cristal liquide, au liant plus éventuellement l'agent réticulant de 0,03:1 à 0,5:1, dans chaque cas par rapport au poids des matières solides, et une teneur en solvant inférieure à 20% en poids.

9. Procédé permettant de réaliser des revêtements de peintures multicouches sur des substrats, par application d'un système de vernis de base/vernis transparent sur un substrat éventuellement préalablement revêtu, caractérisé en ce que le vernis de base appliqué est un produit de revêtement suivant l'une quelconque des revendications 1 à 8 et en ce qu'il est éventuellement revêtu humide sur humide d'un vernis transparent.

10. Procédé suivant la revendication 9, caractérisé en ce que le vernis de base est appliqué sur un substrat sombre ou pourvu d'une couche de revêtement sombre.

11. Procédé suivant la revendication 9 ou 10, caractérisé en ce qu'il est utilisé pour réaliser des revêtements de peintures multicouches de véhicules ou de leurs pièces.

12. Utilisation d'un ou plusieurs pigments en paillettes, de couleur dépendant de l'angle d'observation, qui consistent en des substances réticulées orientées, tridimensionnelles, à structure de type cristal liquide avec une phase chirale, dans des produits de revêtement aqueux, particulièrement dans des vernis de base aqueux pour revêtements de peintures multicouches.
